# EUROPÄISCHE PATENTSCHRIFT

(11) **EP 3 406 511 B1**
(45) Veröffentlichungstag und Bekanntmachung des Hinweises auf die Patenterteilung: **02.12.2020**
(21) Anmeldenummer: 17172249.9
(22) Anmeldetag: 22.05.2017
(51) Int. Cl.: B62M 6/40, B62M 6/55, F16H 23/00

(54) **ELEKTRISCHER FAHRRAD-TRETKURBELANTRIEB**
ELECTRICAL CYCLE GEAR CRANK DRIVE
PÉDALIER DE VÉLO ÉLECTRIQUE

(43) Veröffentlichungstag der Anmeldung: 28.11.2018
(73) Patentinhaber: Amprio GmbH, 41460 Neuss (DE)
(72) Erfinder: Greven, Dietmar, 41541 Dormagen (DE)
(74) Vertreter: terpatent Patentanwälte ter Smitten Eberlein-Van Hoof Rütten Daubert

(56) Entgegenhaltungen:
- CN-A- 106 143 776
- CN-U- 202 609 020
- CN-Y- 200 939 931
- DE-U1-202008 001 881
- DE-U1-202012 012 722
- GB-A- 2 357 329
- US-A1- 2002 084 128
- US-A1- 2011 180 341
- US-A1- 2016 297 500

## Beschreibung

Die Erfindung betrifft einen elektrischen Fahrrad-Tretkurbelantrieb.

Derartige elektrische Fahrrad-Tretkurbelantriebe bzw. Fahrräder mit derartigen elektrischen Fahrrad-Tretkurbelantrieben sind aus dem Stand der Technik bekannt.

Die elektrischen Fahrrad-Tretkurbelantriebe weisen üblicherweise eine drehbar gelagerte Tretkurbelwelle, einen Antriebsmotor und ein Getriebe auf. Dabei ist die Tretkurbelwelle über eine oder mehrere Getriebestufen des Getriebes mit dem Antriebsmotor gekoppelt und weist an beiden axialen Enden jeweils eine Tretkurbel auf. Zusätzlich ist an der Tretkurbelwelle ein Kettenblatt drehfest befestigt, welches beispielsweise über eine Kette mit einem am Hinterrad des Fahrrades drehfest verbundenen Kettenblatt gekoppelt ist. Die Tretkurbelwelle wird durch die Fahrerleistung, die durch die Tretkurbeln in die Tretkurbelwelle eingeleitet wird, und durch die durch den Antriebsmotor erzeugte Motorleistung angetrieben.

Die Übersetzung des Getriebes zwischen dem Antriebsmotor und der Tretkurbelwelle wird dabei derart gewählt, dass eine vergleichsweise hohe Motordrehzahl auf eine niedrigere, für den Fahrer übliche Tretkurbeldrehzahl untersetzt wird. Dabei ist die Untersetzung üblicherweise 30-40.

Alternativ weisen die elektrischen Fahrrad-Tretkurbelantriebe ein Motor-Getriebe und ein Fahrer-Getriebe auf, wobei über das Motor-Getriebe der Antriebsmotor und über das Fahrer-Getriebe die Tretkurbelwelle mit einem Summierelement gekoppelt sind. An dem Summierelement ist das Kettenblatt drehfest angeordnet, über das die Fahrerleistung und die Motorleistung über beispielsweise eine Kette an das Hinterrad bzw. an das mit dem Hinterrad drehfest verbundenes Kettenblatt weitergeleitet werden. Hierbei wird die Motordrehzahl über das Motor-Getriebe auf eine Summierelement-Drehzahl abgesenkt und die Fahrerdrehzahl über das Fahrer-Getriebe auf die Summierelement-Drehzahl erhöht. Eine derartige Ausgestaltung des elektrischen Fahrrad-Tretkurbelantriebs offenbart beispielsweise die WO 2011/113 642 A1. Das Motor-Getriebe kann beispielsweise eine Niedrigübersetzungs-Getriebestufe und eine als Exzentergetriebe ausgeführte Hochübersetzungs-Getriebestufe aufweisen, wobei die Motorleistung über die Niedrigübersetzungs-Getriebestufe und die Hochübersetzungs-Getriebestufe an das Summierelement übertragen wird. Eine derartige Ausgestaltung des Motor-Getriebes ist in der CN 106 143 776 A und in der DE 20 2008 001 881 U1 offenbart. DE 20 2008 001 881 U1 offenbart die folgenden Merkmale des Anspruchs 1; ein Elektrischer Fahrrad-Tretkurbelantrieb mit einem elektrischen Antriebsmotor, welcher über eine Niedrigübersetzungs-Getriebestufe und über eine Hochübersetzungs-Getriebestufe mit einer Tretkurbelwelle gekoppelt ist, wobei die Hochübersetzungs-Getriebestufe von einem Exzentergetriebe gebildet ist, und wobei die Hochübersetzungs-Getriebestufe kinematisch hinter der Niedrigübersetzungs-Getriebestufe angeordnet ist.

Nachteilig an derartigen Ausführungen des elektrischen Fahrrad-Tretkurbelantriebs ist, dass der Fahrrad-Tretkurbelantrieb einen großen Bauraum aufweist. Der Bauraum ist ein entscheidendes Merkmal eines derartigen Fahrrad-Tretkurbelantriebs, da durch einen großbauenden Fahrrad-Tretkurbelantrieb beispielsweise die Bodenfreiheit des Elektrofahrrades eingeschränkt wird und ein Fahren, insbesondere das Fahren im Gelände mit einem Mountainbike, der einen Fahrrad-Tretkurbelantrieb aufweist, erschwert wird. Der Bauraum des elektrischen Fahrrad-Tretkurbelantriebs wird im Wesentlichen durch die Größe des Antriebsmotors und des Getriebes bestimmt.

Der Erfindung liegt daher die Aufgabe zugrunde, einen Fahrrad-Tretkurbelantrieb bereitzustellen, welcher einen reduzierten Bauraum aufweist.

Diese Aufgabe wird durch einen elektrischen Fahrrad-Tretkurbelantrieb mit den Merkmalen des Hauptanspruchs gelöst.

Der elektrische Fahrrad-Tretkurbelantrieb weist einen elektrischen Antriebsmotor auf, der starr in einem Antriebsgehäuse gelagert ist. Der elektrische Antriebsmotor ist über eine Niedrigübersetzungs-Getriebestufe und über eine Hochübersetzungs-Getriebestufe mit einer Tretkurbelwelle gekoppelt, so dass die durch den Antriebsmotor erzeugte Antriebsleistung über die Niedrigübersetzungs-Getriebestufe und über eine Hochübersetzungs-Getriebestufe in die Tretkurbelwelle eingeleitet wird. An den beiden axialen Enden der Tretkurbelwelle ist jeweils eine Tretkurbel drehfest angeordnet, so dass über die Tretkurbeln eine durch den Fahrer erzeugte Fahrleistung in die Tretkurbelwelle eingeleitet wird.

Erfindungsgemäß ist die Hochübersetzungs-Getriebestufe durch ein Exzentergetriebe ausgeführt, wobei die Hochübersetzungs-Getriebestufe kinematisch hinter der Niedrigübersetzungs-Getriebestufe angeordnet ist. Durch die Anordnung der Niedrigübersetzungs-Getriebestufe kinematisch vor der Hochübersetzungs-Getriebestufe kann die Eingangsdrehzahl des Exzentergetriebes durch die gezielte Ausgestaltung der Niedrigübersetzungs-Getriebestufe derart angepasst werden, dass der Wirkungsgrad der Exzentergetriebes und somit des gesamten elektrischen Fahrrad-Tretkurbelantriebs erhöht werden. Die Anordnung der Niedrigübersetzungs-Getriebestufe kinematisch vor der Hochübersetzungs-Getriebestufe bedeutet, dass die Niedrigübersetzungs-Getriebestufe zwischen dem Antriebsmotor und der Hochübersetzungs-Getriebestufe angeordnet ist, wobei der Kraftfluss ausgehend von dem Antriebsmotor, über die Niedrigübersetzungs-Getriebestufe zur Hochübersetzungs-Getriebestufe erfolgt.

Das Exzentergetriebe weist im Vergleich zu anderen Getriebearten, beispielsweise einem Stirnradgetriebe, eine hohe Übersetzung bei einem geringen Bauraum und einem hohen Wirkungsgrad auf.

Durch die Kombination der als Exzentergetriebe ausgeführten Hochübersetzungs-Getriebestufe und der Niedrigübersetzungs-Getriebestufe wird eine im Vergleich zu reinen Stirnradgetrieben hohe Untersetzung zwischen dem Antriebsmotor und der Tretkurbelwelle erreicht, so dass ein schnelldrehender Antriebsmotor mit einer Drehzahl oberhalb von 6000 1/min eingesetzt werden kann. Die Untersetzung der Niedrigübersetzungs-Getriebestufe ist bevorzugt kleiner 10, besonders bevorzugt 5-9, und die Untersetzung der Hochübersetzungs-Getriebestufe ist bevorzugt größer als 10, besonders bevorzugt 12-16.

Die Antriebsleistung eines derartigen schnelldrehenden Antriebsmotors resultiert aus einer hohen Drehzahl und einem niedrigeren Drehmoment, wobei der Bauraum eines Antriebsmotors mit dem sinkenden Antriebsdrehmoment sinkt. Aus diesem Grund weist der schnelldrehende Antriebsmotor bei gleicher Antriebsleistung einen geringeren Bauraum als ein langsamdrehender Antriebmotor auf.

Durch die erfindungsgemäße Ausgestaltung der Getriebestufen und dadurch ermöglichten Einsatz eines schnelldrehenden Antriebsmotors wird der Bauraum des gesamten elektrischen Fahrrad-Tretkurbelantriebs reduziert, so dass eine große Bodenfreiheit des Elektrofahrrades gewährleistet ist und der elektrische Fahrrad-Tretkurbelantrieb leichter in den Rahmen eines Fahrrades integriert werden kann.

Vorzugsweise ist die Antriebsmotor-Drehachse parallel und radial versetzt zur Tretkurbelwellen-Drehachse angeordnet. Bei der Ausgestaltung des elektrischen Fahrrad-Tretkurbelantriebs sollte eine vordefinierte Breite des elektrischen Fahrrad-Tretkurbelantriebs bzw. der Abstand zwischen den beiden Tretkurbeln nicht bzw. nicht für den Fahrer merkbar vergrößert werden, damit ein gewohnter Bewegungsablauf beim Fahrradfahren beibehalten werden kann. Durch Anordnung des Antriebsmotors parallel und radial versetzt zur Tretkurbelwellen-Drehachse wird die Breite des Fahrrad-Tretkurbelantriebs reduziert. Der Antriebsmotor ist vorzugsweise bezogen auf die Hochachse des Fahrrades oberhalb der Tretkurbelwelle angeordnet.

In einer besonders bevorzugten Ausgestaltung ist die Hochübersetzungs-Getriebestufe auf einer Zwischenwelle angeordnet, wobei die Hochübersetzungs-Getriebestufe über eine erste Niedrigübersetzungs-Getriebestufe mit dem elektrischen Antriebsmotor gekoppelt ist und über die zweite Niedrigübersetzungs-Getriebestufe mit der Tretkurbelwelle gekoppelt ist. Auf diese Weise wird die Breite des elektrischen Fahrrad-Tretkurbelantriebs nochmals reduziert.

Vorzugsweise ist die Niedrigübersetzungs-Getriebestufe als Stirnradgetriebe ausgebildet, wodurch das Stirnradgetriebe einfach und kostengünstig herstellbar ist.

In einer bevorzugten Ausgestaltung ist die Niedrigübersetzungs-Getriebestufe als Schneckengetriebe ausgebildet, wobei das Antriebselement eine Schnecke und das Abtriebselement ein in die Schnecke eingreifendes Schneckenrad ist. Die Schnecke bildet hierbei das Abtriebselement des Antriebsmotors. Das Schneckengetriebe ist durch einen mehrfachen gleichzeitigen Zahneingriff im Vergleich zu anderen Getriebearten, beispielsweise einem Stirnradgetriebe oder einem Riemengetriebe, geräusch- und schwingungsarm, wodurch die Antriebsgeräusche des elektrischen Fahrrad-Tretkurbelantriebs reduziert werden können. Die Drehachse des Antriebsmotors bzw. der Schnecke ist senkrecht zur Drehachse des Abtriebselements des Schneckengetriebes angeordnet.

Alternativ ist die Niedrigübersetzungs-Getriebestufe als Riemengetriebe ausgebildet, wodurch der Konstruktionsaufwand sowie die Herstellungs- bzw. Montagekosten reduziert werden, indem die Achsabstände frei wählbar sind. Außerdem werden die von der Tretkurbelwelle bzw. von dem Kettenblatt in Richtung des Antriebsmotors ausgehenden Stöße durch das Riemengetriebe gedämpft.

In einer bevorzugten Ausgestaltung sind die Zahnräder der Niedrigübersetzungs-Getriebestufe aus Kunststoff hergestellt. Der Einsatz von aus Kunststoff hergestellten Zahnrädern ist hierbei möglich, da das von dem Antriebsmotor ausgehende Antriebsdrehmoment relativ gering ist, so dass relativ geringe Belastungen auf die Niedrigübersetzungs-Getriebestufe wirken. Durch die aus Kunststoff ausgeführten Zahnräder kann das Gewicht der Getriebestufe und somit das Gewicht des elektrischen Fahrrad-Tretkurbelantriebs reduziert werden.

Vorzugsweise weist das Exzentergetriebe eine erste Kurvenscheibe und ein zweite Kurvenscheibe auf, welche auf jeweils einem mit einem Abtriebsrad der Niedrigübersetzungs-Getriebestufe drehfest verbundenen Exzenter angeordnet sind und mit einem fest angeordneten Hohlkörper mit einem Kurvenprofil zusammenwirken. Die Kurvenscheiben weisen jeweils eine Kurvenkontur auf, mit der die Kurvenscheiben in das Kurvenprofil des Hohlkörpers eingreifen. Das Kurvenprofil des Hohlkörpers weist eine Vertiefung mehr als die Kurvenkonturen der Kurvenscheiben auf, wobei durch eine derartige Ausgestaltung des Kurvenprofils und die exzentrische Lagerung der Kurvenscheiben die Kurvenscheiben rotieren.

In jeder Kurvenscheibe ist mindestens ein Übertragungselement, beispielsweise als Bolzen ausgeführt, angeordnet, welches in ein drehbar angeordnetes Abtriebselement eingreift. Hierfür ist im Abtriebselement jeweils eine Führungsöffnung ausgebildet, in der jeweils ein Übertragungselement exzentrisch angeordnet ist. Während der Drehbewegung der Kurvenscheiben laufen die Übertragungselemente an den Innenumfangsflächen der jeweiligen Führungsöffnung um und treiben das Abtriebselement an.

Eine derartige Ausgestaltung des Exzentergetriebes führt zu einer hohen Untersetzung, bei einem hohen übertragbaren Drehmoment und einen geringen Bauraum.

In einer bevorzugten Ausgestaltung weist derHohlkörper drehbar gelagerte Rollenelemente auf, wobei die Rollenelemente das Kurvenprofil des Hohlkörpers bilden. Die Rollenelemente sind beispielsweise Lagerhülsen, die drehbar an dem Hohlkörper gelagert sind. Dadurch erfolgt die Relativbewegung zwischen den Kurvenscheiben und dem Hohlkörper durch reine Abrollbewegungen, wodurch der Wirkungsgrad des Exzentergetriebes erhöht wird.

Vorzugsweise weisen die Übertragungselemente Rollenelemente auf, wobei die Rollenelemente mit den im Abtriebselement ausgebildeten Führungsöffnungen zusammenwirken. Die Rollenelemente sind drehbar gelagert, so dass eine reine Rollbewegung zwischen dem Übertragungselement und dem Abtriebselement erfolgt. Auf diese Weise wird der Wirkungsgrad des Exzentergetriebes erhöht.

Zwei Ausführungsbeispiele eines erfindungsgemäßen elektrischen Fahrrad-Tretkurbelantriebs sind in den Figuren dargestellt und nachfolgend beschrieben.

Figur 1 zeigt eine erste erfindungsgemäße Ausführung eines elektrischen Fahrrad-Tretkurbelantriebs in geschnittener Darstellung.

Figur 2 zeigt eine zweite erfindungsgemäße Ausführung eines elektrischen Fahrrad-Tretkurbelantriebs in geschnittener Darstellung.

Figur 3 zeigt einen Schnitt III-III durch das Exzentergetriebe.

Figur 4 zeigt einen Schnitt IV-IV durch das Exzentergetriebe.

Figur 5 zeigt einen Schnitt V-V durch das Exzentergetriebe.

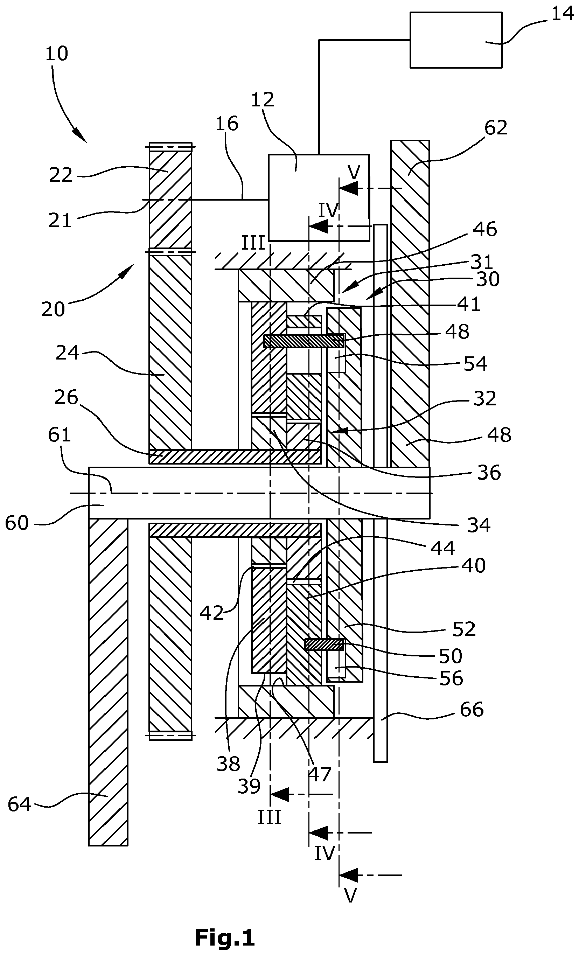

Die Figur 1 zeigt einen Fahrrad-Tretkurbelantrieb 10 mit einem Antriebsmotor 12, einer Niedrigübersetzungs-Getriebestufe 20 und einer Hochübersetzungs-Getriebestufe 30.

Der Antriebsmotor 12 ist mit einer Steuerungseinheit 14 verbunden. Die Steuerungseinheit 14 weist Steuerungsmittel auf, die unter anderem Signale eines in der Figur 1 nicht dargestellten Drehmomentsensors zum Ermitteln eines Fahrerdrehmoments an der Tretkurbel verarbeiten und den Antriebsmotor basierend auf dem durch den Drehmomentsensor ermittelten Fahrerdrehmoment und in Abhängigkeit von einer durch den Fahrer eingestellten Unterstützungsstufe ansteuert.

Der Antriebsmotor 12 ist über eine Antriebswelle 16 mit der Niedrigübersetzungs-Getriebestufe 20 gekoppelt. Die Niedrigübersetzungs-Getriebestufe 20 ist ein Stirnradgetriebe und weist ein Antriebszahnrad 22 auf, welches das Antriebsritzel des Antriebsmotors 12 bildet und mit der Antriebswelle 16 des Antriebsmotors 12 drehfest verbunden ist. Das Antriebszahnrad 22 greift in ein korrespondierendes Abtriebszahnrad 24 der Niedrigübersetzungs-Getriebestufe 20 ein.

Das Abtriebszahnrad 24 ist über ein hülsenartiges Verbindungselement 26 mit der Hochübersetzungs-Getriebestufe 30 gekoppelt. An einem axialen Ende des hülsenartigen Verbindungselements 26 ist das Abtriebszahnrad 24 drehfest angeordnet und an dem entgegengesetzten axialen Ende ist ein Doppelexzenter 32 der Hochübersetzungs-Getriebestufe 30 drehfest angeordnet, so dass das Abtriebszahnrad 24 den Doppelexzenter 32 über das Verbindungselement 26 antreibt.

Der Doppelexzenter 32 weist einen ersten Exzenter 34 und einen zweiten Exzenter 36 auf, wobei die Exzenter 34, 36 um 180° zueinander verdreht angeordnet sind. Auf dem ersten Exzenter 34 ist eine erste Kurvenscheibe 38 drehbar gelagert und auf dem zweiten Exzenter 36 ist eine zweite Kurvenscheibe 40 drehbar gelagert. Die drehbare Lagerung der Kurvenscheiben 38, 40 erfolgt über jeweils ein Lager 42, 44. Die Lager 42, 44 können als Wälzlager oder als Gleitlager, beispielsweise über eine Gleithülse, ausgeführt sein. Die beiden Kurvenscheiben 38, 40 sind über die jeweilige Kurvenkontur 39, 41 mit einem feststehenden Hohlkörper 46 im Eingriff. Der Hohlkörper 46 weist ein zu den Kurvenkonturen 39, 41 korrespondierendes Kurvenprofil 47 auf, wobei das Kurvenprofil 47 eine Vertiefung mehr als die Kurvenscheiben 39, 41 aufweist. Durch die exzentrische Lagerung der Kurvenscheiben 38, 40 sowie eine entsprechende Ausgestaltung der Kurvenkonturen 39, 41 bzw. des Kurvenprofils 47 rotieren die beiden Kurvenscheiben 38, 40 um die Tretkurbelachse 61.

Die 180°-Verdrehung der beiden Kurvenscheiben 38, 40 zueinander führt zu einem Ausgleich der Radialkräfte, die ausgehend von den Kurvenscheiben 38, 40 auf den Hohlkörper 46 wirken. Auf diese Weise werden die Lagerkräfte des elektrischen Tretkurbelantriebs 10 in einem, in der Figur nicht dargestelltem Gehäuse reduziert.

Jede Kurvenscheibe 38, 40 weist mehrere, beispielsweise acht, Übertragungselemente 48, 50 auf, die als Bolzen ausgeführt sind und mit einem axialen Ende fest in der jeweiligen Kurvenscheibe 38, 40 angeordnet sind. Mit dem entgegengesetzten Ende greifen die Übertragungselemente 48, 50 in ein Abtriebselement 52 ein. Das Abtriebselement 52 weist zu den Übertragungselementen 48, 50 korrespondierende Führungsöffnungen 54, 56 auf, wobei die Innendurchmesser der Führungsöffnungen 54, 56 größer als die Außendruckmesser der Übertragungselemente 48, 50 sind und die Übertragungselemente 48, 50 exzentrisch in den Führungsöffnungen angeordnet sind.

Das Abtriebselement 52 ist mit einer Tretkurbelwelle 60 in Antriebsrichtung drehfest verbunden. In Nicht-Antriebsrichtung kann ein Freilauf vorgesehen sein. Die Tretkurbelwelle 60 rotiert um eine Tretkurbelwelle-Drehachse 61, welche radial und parallel versetzt zu einer Antriebsmotor-Achse 21 des Antriebsmotors 12 angeordnet ist. An den beiden axialen Enden der Tretkurbelwelle 60 ist jeweils eine Tretkurbel 62, 64 mit in den Figuren nicht dargestellten Pedalen drehfest angeordnet. Außerdem ist an der Tretkurbelwelle 60 ein Kettenblatt 66 drehfest gelagert, an das beispielsweise eine Kette angreift und die durch den Fahrer und den Antriebsmotor 12 erzeugte Antriebsleistung an ein in der Figur nicht gezeigtes Hinterrad überträgt.

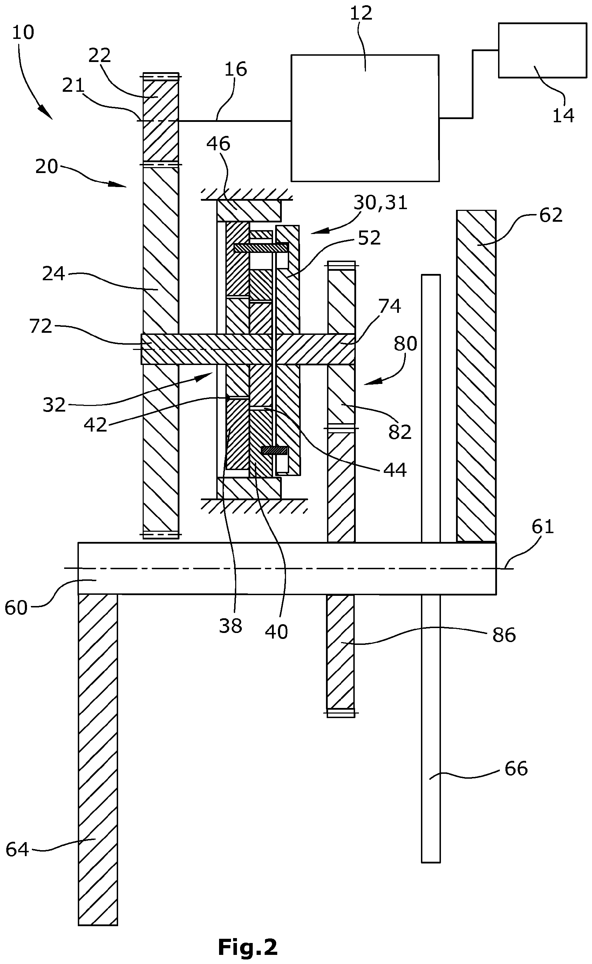

Die Figur 2 zeigt eine zweite Ausführung eines elektrischen Fahrrad-Tretkurbelantriebs 10, wobei der Unterschied zur ersten Ausführung ist, dass die Hochübersetzungs-Getriebestufe 30, d.h. das Exzentergetriebe 31, auf einer Zwischenwelle 72 angeordnet ist. Hierbei ist das Abtriebszahnrad 24 der Niedrigübersetzung-Getriebestufe 20 über die Zwischenwelle 72 mit dem Doppelexzenter 32 drehfest verbunden. Die Hochübersetzungs-Getriebestufe 30 bzw. das Exzentergetriebe 31 entspricht dem Aufbau der ersten Ausführung des Fahrrad-Tretkurbelantriebs 10. Das Abtriebselement 52 ist über eine Abtriebswelle 74 mit einem Antriebszahnrad 82 einer zweiten Niedrigübersetzungs-Getriebestufe 80 drehfest verbunden. Das Antriebszahnrad 82 greift in ein Abtriebszahnrad 86 der zweiten Niedrigübersetzungs-Getriebestufe 80 ein, wobei das Abtriebszahnrad 86 in Antriebsrichtung drehfest mit der Tretkurbelwelle 60 verbunden ist. Die zweite Niedrigübersetzungs-Getriebestufe 80 kann als zusätzliche Übersetzungsstufe mit einer Übersetzung kleiner oder größer 1 oder als eine 1:1-Übersetzung eingesetzt werden.

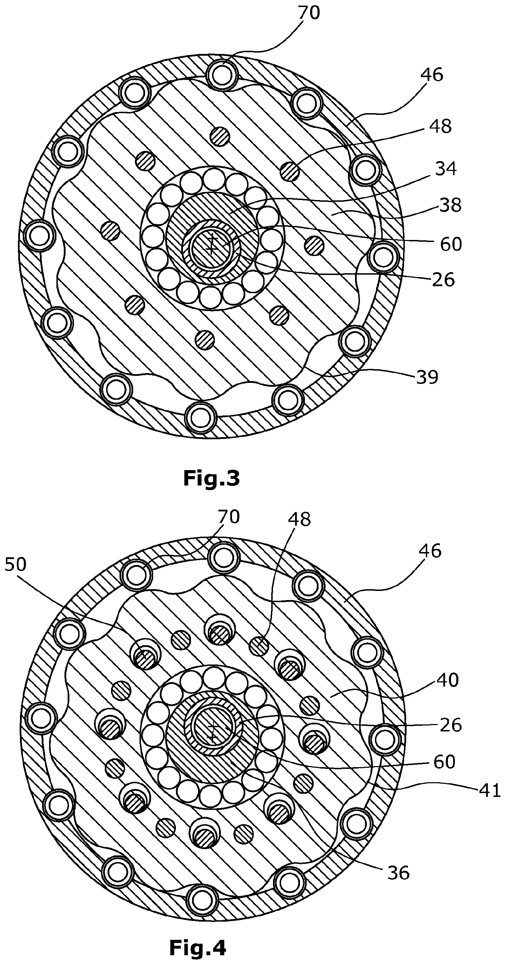

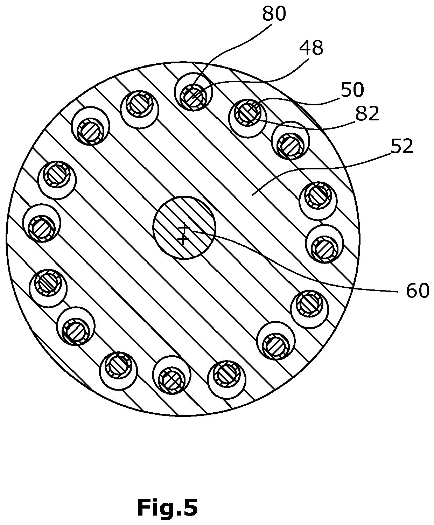

Die Figuren 3, 4 und 5 zeigen drei Schnittdarstellungen des Exzentergetriebes 31, wobei in Figur 3 ein Schnitt durch die erste Kurvenscheibe 38, in Figur 4 ein Schnitt durch die zweite Kurvenscheibe 40 und in Figur 5 ein Schnitt durch das Abtriebselement 52 gezeigt sind. Die Figuren 3 und 4 zeigen den Hohlkörper 46 und die in dem Hohlkörper 46 umlaufenden Kurvenscheiben 38, 40 mit den jeweiligen Kurvenkonturen 39, 41. Der Hohlkörper 46 weist über den Umfang angeordnete Rollenelemente 70 auf, die das mit den Kurvenkonturen 39, 41 korrespondierende Kurvenprofil 47 bilden. Die Rollenelemente 70 sind drehbar an dem Hohlkörper 46 gelagert.

Die Figur 5 zeigt das Abtriebselement 52, welches drehfest mit der Tretkurbelwelle verbunden ist und über die Übertragungselemente 48, 50 mit den beiden Kurvenscheiben 38, 40 wirkverbunden ist. Die Übertragungselemente 48, 50 greifen in die Führungsöffnungen 54, 56 ein und weisen Rollenelemente 80, 82 auf, welche drehbar an den Übertragungselementen 48. 50 gelagert sind.

Durch die an dem Hohlkörper 46 angeordneten Rollenelemente 70 und die an den Übertragungselementen 48, 50 angeordneten Rollenelemente 80, 82 werden die Reibungsverluste zwischen den Kurvenscheiben 38, 40 und Hohlkörper 46 sowie zwischen den Übertragungselementen 48, 50 und den Innenflächen der Führungsöffnungen 54, 56 reduziert und dadurch der Wirkungsgrad des Exzentergetriebes 31 und des gesamten elektrischen Fahrrad-Tretkurbelantriebs 10 erhöht.

Es sollte deutlich sein, dass auch andere konstruktive Ausführungsformen des elektrischen Fahrrad-Tretkurbelantriebs 10 im Vergleich zur beschriebenen Ausführungsform möglich sind, ohne den Schutzbereich des Hauptanspruchs zu verlassen. Dabei kann beispielsweise die Niedrigübersetzungs-Getriebestufe 20 auch als ein Riemengetriebe oder als ein Schneckengetriebe ausgeführt sein.

## Patentansprüche

1. Elektrischer Fahrrad-Tretkurbelantrieb mit
einem elektrischen Antriebsmotor (12), welcher über eine Niedrigübersetzungs-Getriebestufe (20) und über eine Hochübersetzungs-Getriebestufe (30) drehmomentübertragend mit einer Tretkurbelwelle (60) gekoppelt ist,
wobei die Hochübersetzungs-Getriebestufe (30) von einem Exzentergetriebe (31) gebildet ist, und
wobei die Hochübersetzungs-Getriebestufe (30) kinematisch hinter der Niedrigübersetzungs-Getriebestufe (20) angeordnet ist.

2. Elektrischer Fahrrad-Tretkurbelantrieb (10) nach Anspruch 1,
**dadurch gekennzeichnet, dass**
die Antriebsmotor-Drehachse (21) parallel und radial versetzt zur Tretkurbelwellen-Drehachse (61) angeordnet ist.

3. Elektrischer Fahrrad-Tretkurbelantrieb (10) nach Anspruch 1 oder 2,
**dadurch gekennzeichnet, dass**
die Hochübersetzungs-Getriebestufe (30) koaxial zur Tretkurbelwelle (60) angeordnet ist.

4. Elektrischer Fahrrad-Tretkurbelantrieb (10) nach Anspruch 1 oder 2,
**dadurch gekennzeichnet, dass**
die Hochübersetzungs-Getriebestufe (30) auf einer Zwischenwelle (72) angeordnet ist, wobei die Hochübersetzungs-Getriebestufe (30) über eine erste Niedrigübersetzungs-Getriebestufe (20) mit dem elektrischen Antriebsmotor (12) gekoppelt ist und über eine zweite Niedrigübersetzungs-Getriebestufe (80) mit der Tretkurbelwelle (60) gekoppelt ist.

5. Elektrischer Fahrrad-Tretkurbelantrieb (10) nach einem der vorhergehenden Ansprüche,
**dadurch gekennzeichnet, dass**
die Niedrigübersetzungs-Getriebestufe (20, 80) als Stirnradgetriebe ausgebildet ist.

6. Elektrischer Fahrrad-Tretkurbelantrieb (10) nach einem der Ansprüche 3 oder 4,
**dadurch gekennzeichnet, dass**
die Niedrigübersetzungs-Getriebestufe als Schneckengetriebe ausgebildet ist.

7. Elektrischer Fahrrad-Tretkurbelantrieb (10) nach einem der Ansprüche 1 bis 4,
**dadurch gekennzeichnet, dass**
die Niedrigübersetzungs-Getriebestufe als Riemengetriebe ausgebildet ist.

8. Elektrischer Fahrrad-Tretkurbelantrieb (10) nach einem der vorhergehenden Ansprüche,
**dadurch gekennzeichnet, dass**
die Zahnräder (22, 24, 82, 86) der Niedrigübersetzungs-Getriebestufe aus Kunststoff hergestellt sind.

9. Elektrischer Fahrrad-Tretkurbelantrieb (10) nach einem der vorhergehenden Ansprüche,
**dadurch gekennzeichnet, dass**
das Exzentergetriebe (31) eine erste Kurvenscheibe (38) und eine zweite Kurvenscheibe (40) aufweist, wobei die Kurvenscheiben (38, 40) auf jeweils einem Exzenter (34, 36) angeordnet sind und mit einem fest angeordneten Hohlkörper (46) zusammenwirken, und wobei die beiden Kurvenscheiben (38, 40) jeweils über mindestens ein Übertragungselement (48, 50) mit einem Abtriebselement (52) verbunden sind, wobei die Übertragungselemente (48, 50) in jeweils einer im Abtriebselement (52) ausgebildeten Führungsöffnung (54, 56) exzentrisch angeordnet sind.

10. Elektrischer Fahrrad-Tretkurbelantrieb (10) nach Anspruch 9,
**dadurch gekennzeichnet, dass**
der Hohlkörper (46) Rollenelemente (70) aufweist, wobei die Rollenelemente (70) mit den Kurvenscheiben (38, 40) zusammenwirken.

11. Elektrischer Fahrrad-Tretkurbelantrieb (10) nach Anspruch 9 oder 10,
**dadurch gekennzeichnet, dass**
die Übertragungselemente (48, 50) Rollenelemente aufweisen, wobei Rollenelemente (80, 82) mit den im Abtriebselement (52) ausgebildeten Führungsöffnungen (54, 56) zusammenwirken.

## Claims

1. Electric bicycle pedal crank drive comprising
an electric drive motor (12) coupled to a pedal crankshaft (60) via a low-ratio gear stage (20) and a high-ratio gear stage (30) in a torque-transmitting manner,
wherein the high-speed gear stage (30) is formed by an eccentric gear (31), and
wherein the high-ratio gear stage (30) is arranged kinematically downstream of the low-ratio gear stage (20).

2. Electric bicycle pedal crank drive (10) of claim 1, **characterized in that** the drive motor axis of rotation (21) is arranged parallel and radially offset with respect to the pedal crankshaft rotation axis (61).

3. Electric bicycle pedal crank drive (10) of claim 1 or 2, **characterized in that** the high-ratio gear stage (30) is arranged coaxially to the pedal crankshaft (60).

4. Electric bicycle pedal crank drive (10) of claim 1 or 2, **characterized in that** the high-ratio gear stage (30) is arranged on an intermediate shaft (72), wherein the high-ratio gear stage (30) is coupled to the electric drive motor (12) via a first low-ratio gear stage (20) and is coupled to the pedal crankshaft (60) via a second low-ratio gear stage (80).

5. Electric bicycle pedal crank drive (10) of one of the preceding claims, **characterized in that** the low-ratio gear stage (20, 80) is configured as a spur gear.

6. Electric bicycle pedal crank drive (10) of one of claims 3 or 4, **characterized in that** the low-ratio gear stage is configured as a worm gear.

7. Electric bicycle pedal crank drive (10) of one of claims 1 to 4, **characterized in that** the low-ratio gear stage is configured as a belt drive.

8. Electric bicycle pedal crank drive (10) of one of the preceding claims, **characterized in that** the gears (22, 24, 82, 86) of the low-ratio gear stage are made of plastic.

9. Electric bicycle pedal crank drive (10) of one of the preceding claims, **characterized in that** the eccentric gear (31) comprises a first cam disk (38) and a second cam disk (40), the cam disks (38, 40) each being arranged on an eccentric (34, 36) and interacting with a fixedly arranged hollow body (46), and wherein the two cam disks (38, 40) are each connected to an output element (52) via at least one transmission element (48, 50), wherein the transmission elements (48, 50) each are eccentrically arranged in a guide opening (54, 56) formed in the output element (52).

10. Electric bicycle pedal crank drive (10) of claim 9, **characterized in that** the hollow body (46) comprises roller elements (70), the roller elements (70) cooperating with the cam disks (38, 40).

11. Electric bicycle pedal crank drive (10) of claim 9 or 10, **characterized in that** the transmission elements (48, 50) comprise roller elements, wherein roller elements (80, 82) interact with the guide openings (54, 56) formed in the output element (52).

## Revendications

1. Entrainement électrique de pédalier pour vélo, comprenant un moteur électrique (12) couplé à un arbre de pédalier (60), de manière à transmettre un couple, via un étage d'engrenage à faible rapport (20) et un étage d'engrenage à rapport élevé (30),
l'étage d'engrenage à rapport élevé (30) étant formé par un engrenage excentrique (31), et
l'étage d'engrenage à rapport élevé (30) étant disposé cinématiquement en aval de l'étage d'engrenage à rapport faible (20).

2. Entrainement électrique de pédalier pour vélo (10) selon la revendication 1, **caractérisé en ce que** l'axe de rotation du moteur d'entrainement (21) est disposé parallèlement et radialement décalé par rapport à l'axe de rotation (61) de l'arbre de pédalier.

3. Entrainement électrique de pédalier pour vélo (10) selon la revendication 1 ou 2, **caractérisé en ce que** l'étage d'engrenage à rapport élevé (30) est disposé coaxialement par rapport à l'arbre de pédalier (60).

4. Entrainement électrique de pédalier pour vélo (10) selon la revendication 1 ou 2, **caractérisé en ce que** l'étage d'engrenage à rapport élevé (30) est agencé sur un arbre intermédiaire (72), l'étage d'engrenage à rapport élevé (30) étant couplé au moteur d'entrainement électrique (12) via un premier étage d'engrenage à faible rapport (20), et est couplé l'arbre de pédalier (60) via un deuxième étage d'engrenage à faible rapport (80).

5. Entrainement électrique de pédalier pour vélo (10) selon l'une quelconque des revendications précédentes, **caractérisé en ce que** l'étage d'engrenage à faible rapport (20, 80) est conçu comme un engrenage à pignon droit.

6. Entrainement électrique de pédalier pour vélo (10) selon l'une des revendications 3 ou 4, **caractérisé en ce que** l'étage d'engrenage à faible rapport est conçu comme un engrenage à vis sans fin.

7. Entrainement électrique de pédalier pour vélo (10) selon l'une des revendications 1 à 4, **caractérisé en ce que** l'étage d'engrenage à faible rapport est conçu comme un entrainement par courroie.

8. Entrainement électrique de pédalier pour vélo (10) selon l'une quelconque des revendications précédentes, **caractérisé en ce que** les roues dentées (22, 24, 82, 86) de l'étage d'engrenage à faible rapport sont en matière plastique.

9. Entrainement électrique de pédalier pour vélo (10) selon l'une quelconque des revendications précédentes, **caractérisé en ce que** l'engrenage excentrique (31) présente un premier disque de came (38) et un deuxième disque de came (40), les disques de came (38, 40) étant chacun agencés sur un excentrique (34, 36) et coopérant avec un corps creux fixe (46), et dans lequel les deux disques de came (38, 40) sont chacun connectés à un élément de sortie (52) par au moins un élément de transmission (48, 50), les éléments de transmission (48, 50) étant chacun disposés de manière excentrique dans une ouverture de guidage (54, 54) formée dans l'élément de sortie (52).

10. Entrainement électrique de pédalier pour vélo (10) selon la revendication 9, **caractérisé en ce que** le corps creux (46) comporte des éléments de rouleau (70), les éléments de rouleau (70) coopérant avec les disques de came (38, 40).

11. Entrainement électrique de pédalier pour vélo (10) selon la revendication 9 ou 10, **caractérisé en ce que** les éléments de transmission (48, 50) comprennent des éléments à rouleaux, les éléments à rouleaux (80, 82) interagissant avec les ouvertures de guidage (54, 56) formées dans l'élément de sortie (52).
